# EUROPEAN PATENT APPLICATION

(11) **EP 4 841 753 A1**
(43) Date of publication of application: **18.11.2026**
(21) Application number: 24949128.3
(22) Date of filing: 31.07.2024
(51) Int. Cl.: H01M 10/615, H01M 10/658, H01M 10/625

(54) **BATTERY APPARATUS AND ELECTRIC APPARATUS**

(71) Applicant: Contemporary Amperex Technology Co., Limited, Ningde, Fujian 352100 (CN)
(72) Inventor: WU, Guangdang, Ningde, Fujian 352100 (CN); WANG, Jirong, Ningde, Fujian 352100 (CN); WANG, Xiaohui, Ningde, Fujian 352100 (CN); WANG, Zhi, Ningde, Fujian 352100 (CN); LUO, Wenchao, Ningde, Fujian 352100 (CN)
(74) Representative: Ziebig Hengelhaupt Intellectual Property Attorneys Patentanwaltskanzlei PartGmbB
(86) International application number: PCT/CN2024/108993
(87) International publication number: WO 2026/025387

(57) **Abstract**

The present application relates to the technical field of batteries, and discloses a battery apparatus and an electric apparatus. The battery apparatus has high reliability. The battery apparatus comprises a battery cell assembly and a thermal management component, and the battery cell assembly comprises a plurality of battery cells arranged in a first direction. The thermal management component is arranged on one side of the battery cell assembly in a second direction and is used for adjusting the temperature of the battery cells, and the second direction intersects the first direction. The heat exchange efficiency between the thermal management component and the battery cell located at an end portion of at least one of the two ends of the battery cell assembly in the first direction is less than the heat exchange efficiency between the thermal management component and any battery cell located between the two ends of the battery cell assembly in the first direction.

## Description

### TECHNICAL FIELD

The present application relates to the field of battery technologies, and specifically relates to a battery apparatus and an electric apparatus.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technologies are an important factor related to the development of the electric vehicles.

How the reliability of battery apparatuses is improved is an urgent problem to be solved in battery technologies.

### SUMMARY

In view of the above problems, the present application provides a battery apparatus and an electric apparatus, which can improve the reliability of the battery apparatus.

According to a first aspect, the present application provides a battery apparatus. The battery apparatus includes a battery cell assembly and a thermal management component, where the battery cell assembly includes a plurality of battery cells arranged along a first direction; and the thermal management component, where the thermal management component is disposed on one side of the battery cell assembly along a second direction and is configured to regulate temperatures of the battery cells, the second direction intersecting the first direction. Heat exchange efficiency between the thermal management component and the battery cell at an end portion located at at least one end of the two ends along the first direction of the battery cell assembly is less than heat exchange efficiency with any battery cell located between the two ends along the first direction.

In the above solution, since the heat exchange efficiency between the thermal management component and the battery cell at the end portion located at at least one end of the two ends along the first direction of the battery cell assembly is less than the heat exchange efficiency with any battery cell located between the two ends along the first direction, the temperature distribution of the battery cell assembly is relatively uniform, the risk of thermal stress concentration is relatively low, and the reliability of the battery apparatus is relatively high.

In one or more embodiments of the first aspect, the thermal management component has a flow channel configured to accommodate a heat exchange medium. The thermal management component further includes a medium inlet and a medium outlet, where the medium inlet and the medium outlet both communicate with the flow channel, an orthographic projection of the battery cell assembly on the thermal management component is a first projection, and the medium inlet and the medium outlet are located on a same side of the first projection along the first direction.

In the above solution, since the medium inlet and the medium outlet are located on the same side of the first projection along the first direction, setting the heat exchange efficiency between the thermal management component and the battery cell at the end portion located at at least one end of the two ends along the first direction of the battery cell assembly to be less than the heat exchange efficiency with any battery cell located between the two ends along the first direction can significantly lower the risk of thermal stress concentration in the battery cell assembly caused by an excessive temperature difference between the battery cell at the end portion and the remaining battery cells.

In one or more embodiments of the first aspect, among the plurality of battery cells, two battery cells located at two ends are respectively a first end battery cell and a second end battery cell. The first end battery cell is closer to the medium inlet and the medium outlet than the second end battery cell. The first end battery cell at least partially overlaps with the flow channel, and the second end battery cell does not overlap with the flow channel.

In the above solution, since the first end battery cell at least partially overlaps with the flow channel, and the second end battery cell does not overlap with the flow channel, the heat exchange efficiencies of the battery cells at two ends are relatively low, and the heat exchange efficiency of the remaining battery cells is relatively high, allowing the temperatures of all battery cells in the battery cell assembly to have little difference during the heat exchange process, thereby achieving a relatively uniform overall temperature distribution of the battery cell assembly.

In one or more embodiments of the first aspect, the flow channel includes a first manifold, a second manifold, a third manifold, a plurality of first branch channels, and a plurality of second branch channels. Along the first direction, the first manifold and the second manifold are spaced apart, the first manifold is located between the medium inlet and the second manifold, the plurality of first branch channels are arranged side by side between the first manifold and the second manifold, and the medium inlet communicates with the first manifold. Along the first direction, the second manifold and the third manifold are spaced apart, the third manifold is located between the medium outlet and the second manifold, the plurality of second branch channels are arranged side by side between the second manifold and the third manifold, and the medium outlet communicates with the third manifold.

In the above solution, subdividing the flow channel into manifolds and branch channels can further improve the uniformity of heat exchange by the heat exchange medium.

In one or more embodiments of the first aspect, the thermal management component has a first cavity, a second cavity, a third cavity, and a fourth cavity that are sequentially communicated. The medium inlet communicates with the first cavity, and the medium outlet communicates with the fourth cavity. The first cavity and the second cavity are separated by a first partition plate, and a first communication port communicating the first cavity and the second cavity is provided on the first partition plate. The second cavity and the third cavity are separated by a second partition plate, and a second communication port communicating the second cavity and the third cavity is provided on the second partition plate. The third cavity and the fourth cavity are separated by a third partition plate, and a third communication port communicating the third cavity and the fourth cavity is provided on the third partition plate. A plurality of first branch channels are partitioned in the second cavity by a plurality of fourth partition plates, and a plurality of second branch channels are partitioned in the third cavity by a plurality of fifth partition plates.

In the above solution, different cavities are sequentially communicated between the medium inlet and the medium outlet by providing partition plates and communication ports on the partition plates, resulting in lower processing costs and higher processing efficiency.

In one or more embodiments of the first aspect, in a same projection plane perpendicular to the second direction, an orthographic projection of the first end battery cell at least partially overlaps with an orthographic projection of the first cavity; and/or, an orthographic projection of the first end battery cell at least partially overlaps with an orthographic projection of the fourth cavity.

In the above solution, since the first cavity is provided with only the medium inlet, and the fourth cavity is provided with only the medium outlet, the heat exchange efficiency of the heat exchange medium in the first cavity and the fourth cavity is low. In the same projection plane perpendicular to the second direction, the orthographic projection of the first end battery cell is set to at least partially overlap with the orthographic projection of the first cavity, and/or at least partially overlap with the orthographic projection of the fourth cavity. Thus, the heat exchange efficiency of the first end battery cell can be maintained at a relatively low level, which is conducive to balancing the temperature difference of the battery cell assembly.

In one or more embodiments of the first aspect, in the same projection plane perpendicular to the second direction, among the plurality of battery cells, the orthographic projections of the other battery cells except the first end battery cell and the second end battery cell all at least partially overlap with an orthographic projection of the second cavity; and/or, the orthographic projections of the other battery cells except the first end battery cell and the second end battery cell all at least partially overlap with an orthographic projection of the third cavity.

In the above solution, since the heat exchange areas of the flow channels in the second cavity and the third cavity are relatively large, in the same projection plane perpendicular to the second direction, the orthographic projections of the other battery cells except the first end battery cell and the second end battery cell are set to at least partially overlap with the orthographic projection of the second cavity, and/or at least partially overlap with the orthographic projection of the third cavity, resulting in higher heat exchange efficiency of the other battery cells than that of the end battery cells, which is conducive to balancing the temperature difference of the battery cell assembly.

In one or more embodiments of the first aspect, the fourth partition plate has a first end close to the first partition plate, and the first end is spaced apart from the first partition plate. Among the plurality of fourth partition plates, the closer the fourth partition plate is to the first communication port, the greater a distance between the first end thereof and the first partition plate.

In the above solution, since the closer the fourth partition plate is to the first communication port, the greater the distance between the first end thereof and the first partition plate, the heat exchange medium can flow more quickly to the remaining portion of the thermal management component after the heat exchange medium passes through the first communication port and toward the medium outlet, thereby improving the heat exchange efficiency.

In one or more embodiments of the first aspect, along the first direction, the second cavity has a first inner wall opposite to the first partition plate. The fourth partition plate has a second end close to the first inner wall, and the second end is spaced apart from the first inner wall. Among the plurality of fourth partition plates, the closer the fourth partition plate is to the second communication port, the greater a distance between the second end thereof and the first inner wall.

In the above solution, since the closer the fourth partition plate is to the second communication port, the greater the distance between the second end thereof and the first inner wall, the heat exchange medium can flow more quickly to the remaining portion of the thermal management component after the heat exchange medium passes through the second communication port and toward the medium outlet, thereby improving the heat exchange efficiency.

In one or more embodiments of the first aspect, the fifth partition plate has a third end close to the third partition plate, and the third end is spaced apart from the third partition plate. Among the plurality of fifth partition plates, the closer the fifth partition plate is to the third communication port, the greater a distance between the third end thereof and the fifth partition plate.

In the above solution, since the closer the fifth partition plate is to the third communication port, the greater the distance between the third end thereof and the fifth partition plate, the heat exchange medium can flow more quickly through the third communication port and toward the medium outlet, thereby improving the heat exchange efficiency.

In one or more embodiments of the first aspect, along the first direction, the third cavity has a second inner wall opposite to the fifth partition plate. The fifth partition plate has a fourth end close to the second inner wall, and the fourth end is spaced apart from the second inner wall. Among the plurality of fifth partition plates, the closer the fifth partition plate is to the second communication port, the greater a distance between the fourth end thereof and the second inner wall.

In the above solution, since the closer the fifth partition plate is to the second communication port, the greater the distance between the fourth end thereof and the second inner wall, the heat exchange medium can flow more quickly to the remaining portion of the thermal management component after the heat exchange medium passes through the second communication port and toward the medium outlet, thereby improving the heat exchange efficiency.

In one or more embodiments of the first aspect, the thermal management component further includes a fifth cavity and a sixth cavity, where the fifth cavity is located on a side of the second cavity away from the first cavity along the first direction, the sixth cavity is located on a side of the third cavity away from the fourth cavity, and the fifth cavity and the sixth cavity do not communicate with the flow channel.

In the above solution, since the fifth cavity and the sixth cavity do not communicate with the flow channel, the thermal management component has regions with relatively low heat exchange efficiency. Arranging the end battery cells in these regions is conducive to balancing the temperature difference of the battery cell assembly.

In one or more embodiments of the first aspect, the thermal management component includes a separately formed first profile, second profile, third profile, fourth profile, fifth profile, and sixth profile, where the first profile has the first cavity, the second profile has the second cavity, the third profile has the third cavity, the fourth profile has the fourth cavity, the fifth profile has the fifth cavity, and the sixth profile has the sixth cavity.

In the above solution, forming the thermal management component by splicing profiles can utilize the inherent configurations inside the profiles to form the flow channel, resulting in lower costs and higher processing efficiency. In addition, the deformation amount of the thermal management component during processing is low, and the precision is high.

In one or more embodiments of the first aspect, in the same projection plane perpendicular to the second direction, an orthographic projection of the second end battery cell at least partially overlaps with an orthographic projection of the fifth cavity; and/or, an orthographic projection of the second end battery cell at least partially overlaps with an orthographic projection of the sixth cavity.

In the above solution, since the fifth cavity and the sixth cavity do not communicate with the flow channel, the correspondingly arranged second end battery cell can have relatively low heat exchange efficiency, thereby making the temperature difference among the individual battery cells within the battery cell assembly relatively small.

In one or more embodiments of the first aspect, among the plurality of battery cells, two battery cells located at two ends are respectively a first end battery cell and a second end battery cell. The battery apparatus further includes a first thermal insulation pad, where the first thermal insulation pad is disposed between the first end battery cell and the thermal management component; and/or, the battery apparatus further includes a second thermal insulation pad, where the second thermal insulation pad is disposed between the second end battery cell and the thermal management component.

In the above solution, providing a thermal insulation pad between the battery cell at the end portion and the thermal management component can reduce the heat exchange efficiency of the thermal management component to the battery cell at the end portion, thereby making the temperature difference among the individual battery cells within the battery cell assembly relatively small, and lowering the risk of thermal stress concentration in the battery cell assembly.

In one or more embodiments of the first aspect, among the plurality of battery cells, two battery cells located at two ends are respectively a first end battery cell and a second end battery cell. The battery apparatus further includes a first limiting member and a second limiting member, where the first limiting member and the second limiting member are spaced apart along the first direction, the plurality of battery cells are disposed between the first limiting member and the second limiting member, the first end battery cell is located at an end of the battery cell assembly close to the first limiting member, and the second end battery cell is located at an end of the battery cell assembly close to the second limiting member.

In the above solution, the limiting members increase the heat exchange path between the battery cell at the end portion and the thermal management component, setting the heat exchange efficiency between the thermal management component and the battery cell at the end portion located at at least one end of the two ends along the first direction of the battery cell assembly to be less than the heat exchange efficiency with any battery cell located between the two ends along the first direction can significantly lower the risk of thermal stress concentration in the battery cell assembly.

In one or more embodiments of the first aspect, the battery apparatus further includes a third thermal insulation pad, where the third thermal insulation pad is disposed between the first limiting member and the first end battery cell; and/or, a fourth thermal insulation pad, where the fourth thermal insulation pad is disposed between the second limiting member and the second end battery cell.

In the above solution, disposing a thermal insulation pad between the limiting member and the battery cell at the end portion can reduce the heat exchange efficiency of the thermal management component to the battery cell at the end portion, thereby making the temperature difference among the individual battery cells within the battery cell assembly relatively small, and lowering the risk of thermal stress concentration in the battery cell assembly.

In one or more embodiments of the first aspect, a material of the first limiting member is metal, and/or, a material of the second limiting member is metal.

In the above solution, since the limiting member made of metal has relatively high thermal conductivity, setting the heat exchange efficiency between the thermal management component and the battery cell at the end portion located at at least one end of the two ends along the first direction of the battery cell assembly to be less than the heat exchange efficiency with any battery cell located between the two ends along the first direction can significantly lower the risk of thermal stress concentration in the battery cell assembly.

According to a second aspect, the present application provides an electric apparatus, including the battery apparatus of the above solution, where the battery apparatus is configured to provide electrical energy.

Since the battery apparatus of the above solution has high reliability, the electric apparatus including the battery apparatus of the above solution also has high reliability.

The foregoing description is merely an overview of the technical solution of the present application. For a better understanding of the technical means in the present application such that they can be implemented according to the content of the specification, and to make the other objectives, features, and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the drawings:
FIG. 1 is a schematic structural diagram of a vehicle according to some embodiments of the present application;
FIG. 2 is an exploded view of a battery apparatus according to some embodiments of the present application;
FIG. 3 is an axial side view of a partial structure of a battery apparatus according to some embodiments of the present application;
FIG. 4 is an axial side view of a partial structure of a battery apparatus according to some other embodiments of the present application;
FIG. 5 is a schematic structural diagram of a thermal management component according to some embodiments of the present application;
FIG. 6 is a cross-sectional view of a thermal management component according to some embodiments of the present application;
FIG. 7 is a locally enlarged view of location A in FIG. 6; and
FIG. 8 is a locally enlarged view of location B in FIG. 6.

Reference signs in specific embodiments are described as follows:
1000-vehicle; 200-controller; 300-motor; 100-battery apparatus; 11-box body; 111-first box body; 112-second box body; 12-battery cell; 121-first end battery cell; 122-second end battery cell; 13-thermal management component; 131-medium inlet; 132-medium outlet; 133-first manifold; 134-second manifold; 135-third manifold; 136-first branch channel; 137-second branch channel; 138-first cavity; 139-second cavity; 1310-third cavity; 1311-fourth cavity; 1312-first partition plate; 13121-first communication port; 1313-second partition plate; 13131-second communication port; 1314-third partition plate; 13141-third communication port; 1315-fourth partition plate; 1316-fifth partition plate; 1317-first inner wall; 1318-second inner wall; 1319-fifth cavity; 1320-sixth cavity; 1321-first profile; 1322-second profile; 1323-third profile; 1324-fourth profile; 1325-fifth profile; 1326-sixth profile; 14-first thermal insulation pad; 15-first limiting member; 16-second limiting member; X-first direction; and Y-second direction.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application belongs. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of embodiments of the present application, "a plurality of" means at least two unless otherwise specifically stated.

In this specification, reference to "embodiment" means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

In the descriptions of the embodiments of the present application, the term "a plurality of" means more than two (inclusive). Similarly, "a plurality of groups" means more than two (inclusive) groups, and "a plurality of pieces" means more than two (inclusive) pieces.

In some high-power application scenarios such as electric vehicles, the application of battery apparatuses includes three levels: a battery cell, a battery module, and a battery apparatus. A battery module is formed by electrically connecting a specific quantity of battery cells and putting the battery cells into a frame to protect the battery cells from external impact, heat, vibration, and the like. A battery apparatus refers to the final state of a battery apparatus system installed in an electric vehicle. The battery apparatus mentioned in the embodiments of the present application is a single physical module that includes one or more battery cells for providing higher voltage and capacity. The battery apparatus generally includes a box body for packaging one or more battery cells. The box body can lower the risk of liquids or other foreign matter from affecting charging or discharging of the battery cell.

The battery apparatus (Battery Apparatus) mentioned in the embodiments of the present application may include one or more battery cell assemblies for providing voltage and capacity. The battery cell assembly (Battery Cell Assembly) may include a plurality of battery cells, and the plurality of battery cells are connected in series, parallel, or series-parallel via the busbar.

In some embodiments, the battery cell assembly (Battery Cell Assembly) is generally formed by arranging a plurality of battery cells. As an example, the battery cell assembly may be a battery module (Battery Module), and the battery module is formed by arranging and fixing a plurality of battery cells into an independent module. As an example, the battery module can be formed by bundling a plurality of battery cells with straps.

In some embodiments, the battery apparatus may be a battery pack (battery Pack), the battery pack includes a box body and one or more battery cell assemblies, and the battery cell assemblies are accommodated in the box body.

As an example, the battery cell assembly may be a battery module, and the battery cell assembly may be accommodated in the box body by fixing the battery module in the box body.

As an example, the battery cell assembly may also be accommodated in the box body by directly fixing a plurality of battery cells in the box body.

The following will mainly focus on the prismatic battery cells. It should be appreciated that the embodiments described below are also applicable to the cylindrical battery cell, a soft pouch battery cell, or a blade battery cell in some aspects.

In a typical battery cell structure, the battery cell includes a housing, an electrode assembly, and an electrolyte. The housing includes an end cover and a housing body, and the end cover closes the opening of the housing body to define an accommodation space for accommodating the electrode assembly.

For the development of battery technologies, many design factors need to be considered, for example, performance parameters such as energy density, cycle life, discharge capacity, and charge and discharge rate, as well as the reliability of the battery apparatus.

The battery apparatus regulates temperatures of the battery cells through a thermal management component. During the heat exchange process of the heat exchange medium, in a typical battery cell assembly, there is a large temperature difference between the battery cell at the end portion thereof and the remaining battery cells, which causes an excessive temperature difference among the individual battery cell within the battery cell assembly, easily leading to thermal stress concentration. Once the above phenomenon occurs, the performance of the housing or other components of the battery cell decreases, or even the material is be damaged, such as connection failure, housing breakage, and other adverse phenomena. As a result, the reliability of the battery apparatus is poor.

In view of this, the present application provides a battery apparatus. The battery apparatus includes a battery cell assembly and a thermal management component, where the battery cell assembly includes a plurality of battery cells arranged along a first direction; and the thermal management component, where the thermal management component is disposed on one side of the battery cell assembly along a second direction and is configured to regulate temperatures of the battery cells, the second direction intersecting the first direction. Heat exchange efficiency between the thermal management component and the battery cell at an end portion located at at least one end of the two ends along the first direction of the battery cell assembly is less than heat exchange efficiency with any battery cell located between the two ends along the first direction. Since the heat exchange efficiency between the thermal management component and the battery cell at the end portion located at at least one end of the two ends along the first direction of the battery cell assembly is less than the heat exchange efficiency with any battery cell located between the two ends along the first direction, the temperature distribution of the battery cell assembly is relatively uniform, the risk of thermal stress concentration is relatively low, and the reliability of the battery apparatus is relatively high.

The technical solution described in the embodiments of the present application is applicable to battery cells, battery apparatuses, and electric apparatuses using battery apparatuses.

The electric apparatus includes but is not limited to: an electric bicycle, an electric vehicle, a ship, a spacecraft, and the like. For example, the spacecraft includes an airplane, a rocket, a space shuttle, and a spaceship.

For ease of description, an electric apparatus according to an embodiment of the present application being a vehicle 1000 is used as an example for description of the following embodiments.

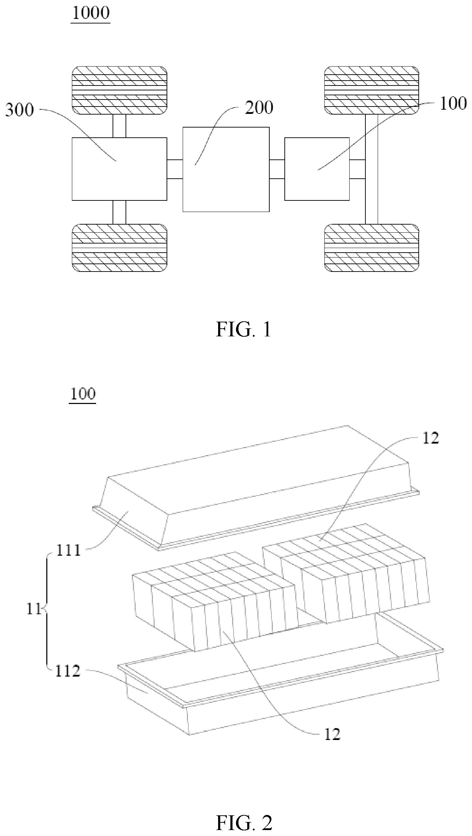

For example, FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid electric vehicle, an extended range electric vehicle, or the like. A motor 300, a controller 200, and a battery apparatus 100 may be disposed inside the vehicle 1000, and the controller 200 is configured to control the battery apparatus 100 to supply power to the motor 300. For example, the battery apparatus 100 may be disposed at the bottom, the front, or the rear of the vehicle 1000. The battery apparatus 100 may be configured to supply power to the vehicle 1000. For example, the battery apparatus 100 may be used as an operational power source for the vehicle 1000 for use in a circuit system of the vehicle 1000, for example, to satisfy power needs of start, navigation, and running of the vehicle 1000. In some other embodiments of the present application, the battery apparatus 100 can be used as not only the operational power source for the vehicle 1000 but also a driving power source for the vehicle 1000, replacing or partially replacing fossil fuel or natural gas to provide driving traction for the vehicle 1000.

To meet different power usage requirements, the battery apparatus 100 may include a plurality of battery cells 12, and the plurality of battery cells 12 may be connected in series, parallel, or series-parallel, where being connected in series-parallel means a combination of series and parallel connections. The battery apparatus 100 may also be referred to as a battery pack. Optionally, the plurality of battery cells 12 may first be connected in series, parallel, or series-parallel to constitute a battery module, and then a plurality of battery modules are connected in series, parallel, or series-parallel to constitute a battery apparatus 100. In other words, the plurality of battery cells 12 may directly constitute the battery apparatus 100, or may first constitute the battery modules, which then constitute the battery apparatus 100.

For example, referring to FIG. 2, FIG. 2 is an exploded view of a battery apparatus 100 according to some embodiments of the present application. The battery apparatus 100 may include a plurality of battery cells 12. The battery apparatus 100 may further include a box body 11. Inside of the box body 11 is a hollow structure. The plurality of battery cells 12 are accommodated in the box body 11. As shown in FIG. 2, here they are respectively referred to as a first box body 111 and a second box body 112, and the first box body 111 and the second box body 112 are snap-fitted together. The shapes of the first box body 111 and the second box body 112 may be determined according to a shape of the combination of the plurality of battery cells 12, and the first box body 111 and the second box body 112 each may have an opening surface. For example, the first box body 111 and the second box body 112 each may be a hollow cuboid and have only one face with an opening surface, where an opening surface of the first box body 111 and an opening surface of the second box body 112 are opposite each other, and the first box body 111 and the second box body 112 are snap-fitted to form a box body 11 having an enclosed chamber. The plurality of battery cells 12 are connected in series, parallel, or series-parallel and then placed into the box body 11 formed after the first box body 111 and the second box body 112 are snap-fitted.

Optionally, the battery apparatus 100 may further include other structures. Details are not described herein. For example, the battery apparatus 100 may further include a busbar, and the busbar is configured to implement an electrical connection among the plurality of battery cells 12, for example, a parallel connection, a series connection, or a series-parallel connection. Specifically, the busbar may implement the electrical connection among the battery cells 12 by connecting to the electrode terminals of the battery cells 12. Further, the busbar may be fixed to the electrode terminals of the battery cells 12 by welding. The electrical energy of the plurality of battery cells 12 may be further led out through a conductive mechanism that passes through the box body 11.

Based on different power demands, the battery cells 12 may be provided in any quantity. The plurality of battery cells 12 may be connected in series, in parallel, or in series-parallel to achieve greater capacity or power. Because the quantity of battery cells 12 included in each battery apparatus 100 may be large, for ease of mounting, the battery cells 12 may be arranged in groups, and each group of battery cells 12 forms a battery module. The quantity of the battery cells 12 included in the battery module is not limited, and may be set according to requirements. The battery apparatus 100 may include a plurality of battery modules. These battery modules may be connected in series, parallel, or series-parallel.

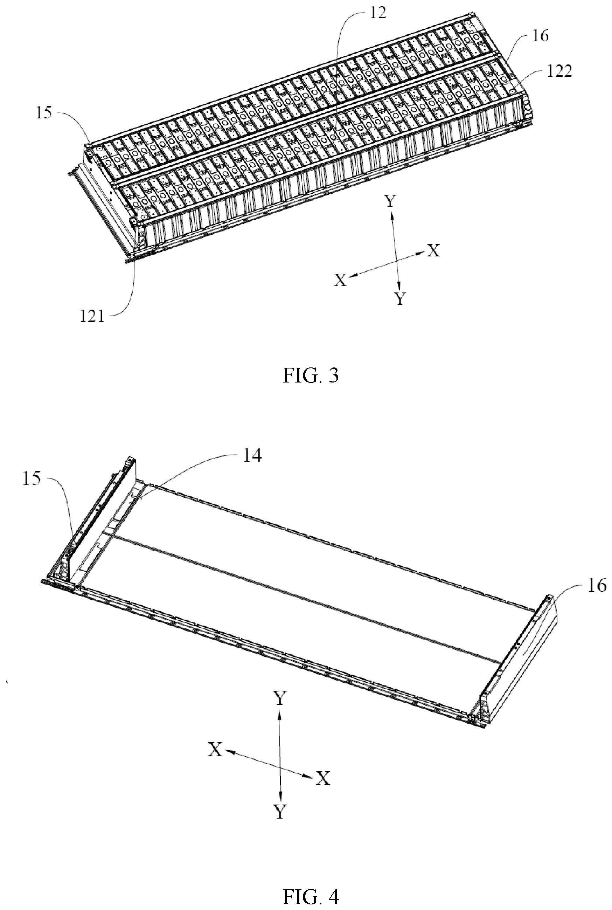

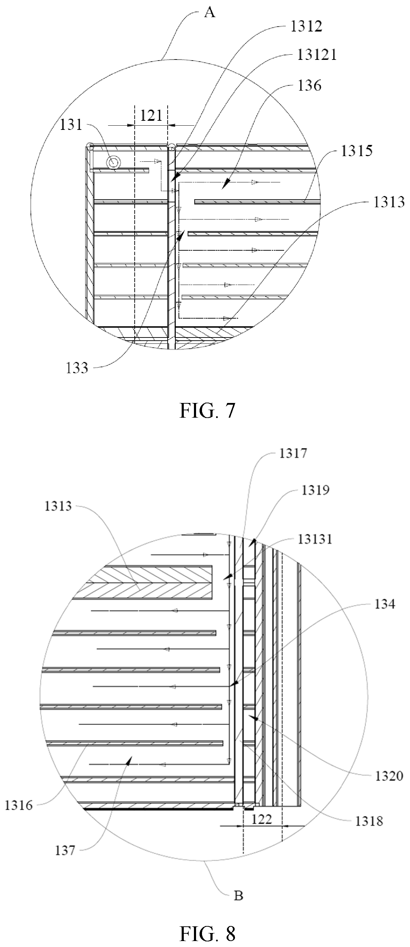

According to some embodiments of the present application, referring to FIGs. 3 to 8, the present application provides a battery apparatus 100. The battery apparatus 100 includes a battery cell assembly and a thermal management component 13, where the battery cell assembly includes a plurality of battery cells 12 arranged along a first direction X; and the thermal management component 13, where the thermal management component 13 is disposed on one side of the battery cell assembly along a second direction Y and is configured to regulate temperatures of the battery cells 12, the second direction Y intersecting the first direction X. The heat exchange efficiency between the thermal management component 13 and the battery cell 12 at an end portion located at at least one end of the two ends along the first direction X of the battery cell assembly is less than the heat exchange efficiency with any battery cell 12 located between the two ends along the first direction X.

There are a plurality of manners to set the heat exchange efficiency of the battery cell 12 at the end portion to be less than the heat exchange efficiency of the remaining battery cells 12, including but not limited to: in embodiments where the thermal management component 13 has a flow channel, the end battery cell 12 may be made not to overlap with the flow channel. An overlapping area between the end battery cell 12 and the flow channel may also be made smaller than an overlapping area between the remaining battery cells 12 and the flow channel. The flow rate of the heat exchange medium in the flow channel corresponding to the end battery cell 12 may also be set to be lower than the flow rate of the heat exchange medium in the flow channel at the corresponding points of the remaining battery cells 12. In some embodiments, the thermal conductivity of the material of the portion where the end battery cell 12 contact the thermal management component 13 may be set to be lower than the thermal conductivity of the material of the portion where the remaining battery cells 12 contact the thermal management component 13. Certainly, in some embodiments, a thermal insulation pad may also be added between the battery cell 12 at the end portion and the thermal management component 13. Certainly, the heat exchange efficiency may also be adjusted by combining the above different manners.

The heat exchange medium may be gas, liquid, or gas-liquid mixture, or the like.

In some embodiments, the thermal management component 13 carries the battery cell assembly.

In some embodiments, the plurality of battery cells 12 may be fixed by straps.

In some embodiments, the plurality of battery cells 12 may be fixed by pressing strips.

The heat exchange efficiency may be determined by measuring the temperature and flow rate of the medium and calculating the heat input and output of the medium. Alternatively, the heat exchange efficiency may be determined by measuring the temperature difference of the medium and the heat exchange area and calculating the heat transfer coefficient of the medium. Alternatively, heat exchange efficiency may be determined by establishing a mathematical model to simulate the heat exchange process and predict the heat exchange effect. Certainly, thermal imaging technology may also be used to detect the heat exchange efficiency.

In the above solution, since the heat exchange efficiency between the thermal management component 13 and the battery cell 12 at the end portion located at at least one end of the two ends along the first direction X of the battery cell assembly is less than the heat exchange efficiency with any battery cell 12 located between the two ends along the first direction X, the temperature distribution of the battery cell assembly is relatively uniform, the risk of thermal stress concentration is relatively low, and the reliability of the battery apparatus 100 is relatively high.

According to some embodiments of the present application, referring to FIGs. 3 to 8, the thermal management component 13 has a flow channel configured to accommodate a heat exchange medium. The thermal management component 13 further includes a medium inlet 131 and a medium outlet 132, where the medium inlet 131 and the medium outlet 132 both communicate with the flow channel, an orthographic projection of the battery cell assembly on the thermal management component 13 is a first projection, and the medium inlet 131 and the medium outlet 132 are located on a same side of the first projection along the first direction X.

In some embodiments, the medium inlet 131 and the medium outlet 132 are both water nozzles.

The flow channel may be formed by machining, injection molding, casting, 3D printing, splicing and welding, or the like.

The following will take the heat exchange area of the flow channel or the arrangement position of the thermal insulation pad as an example. The above other manners of adjusting the heat exchange efficiency may be adaptively corresponding to the corresponding features.

The medium inlet 131 and the medium outlet 132 being located on the same side of the first projection along the first direction X also means that the assembly of the medium inlet 131 and the medium outlet 132 does not interfere with the battery cell 12, and is conducive to improving the energy density of the battery apparatus 100.

In the above solution, since the medium inlet 131 and the medium outlet 132 are located on the same side of the first projection along the first direction X, the risk of an excessive temperature difference between the end battery cells 12 on the side close to the medium inlet 131 and the medium outlet 132 and the remaining battery cells 12 is relatively high. Setting the heat exchange efficiency between the thermal management component 13 and the battery cell 12 at the end portion located at at least one end of the two ends along the first direction X of the battery cell assembly to be less than the heat exchange efficiency with any battery cell 12 located between the two ends along the first direction X can significantly lower the risk of thermal stress concentration in the battery cell assembly caused by an excessive temperature difference between the battery cell 12 at the end portion and the remaining battery cells 12.

According to some embodiments of the present application, referring to FIGs. 3 to 8, among the plurality of battery cells 12, two battery cells 12 located at the two ends are respectively a first end battery cell 121 and a second end battery cell 122. The first end battery cell 121 is closer to the medium inlet 131 and the medium outlet 132 than the second end battery cell 122. The first end battery cell 121 at least partially overlaps with the flow channel, and the second end battery cell 122 does not overlap with the flow channel.

In some embodiments, among the plurality of battery cells 12, the battery cell 12 located between the first end battery cell 121 and the second end battery cell 122 along the first direction X is a middle battery cell 12, an overlapping area between the second end battery cell 122 and the flow channel is smaller than an overlapping area between the first end battery cell 121 and the flow channel, and the overlapping area between the first end battery cell 121 and the flow channel is smaller than an overlapping area between the middle battery cell 12 and the flow channel.

In the above solution, since the first end battery cell 121 at least partially overlaps with the flow channel, and the second end battery cell 122 does not overlap with the flow channel, the heat exchange efficiencies of the battery cells 12 at two ends are relatively low, and the heat exchange efficiency of the remaining battery cells 12 is relatively high, allowing the temperatures of all battery cells 12 in the battery cell assembly to have little difference during the heat exchange process, thereby achieving a relatively uniform overall temperature distribution of the battery cell assembly.

According to some embodiments of the present application, referring to FIGs. 3 to 8, the flow channel includes a first manifold 133, a second manifold 134, a third manifold 135, a plurality of first branch channels 136, and a plurality of second branch channels 137. Along the first direction X, the first manifold 133 and the second manifold 134 are spaced apart, the first manifold 133 is located between the medium inlet 131 and the second manifold 134, the plurality of first branch channels 136 are arranged side by side between the first manifold 133 and the second manifold 134, and the medium inlet 131 communicates with the first manifold 133. Along the first direction X, the second manifold 134 and the third manifold 135 are spaced apart, the third manifold 135 is located between the medium outlet 132 and the second manifold 134, the plurality of second branch channels 137 are arranged side by side between the second manifold 134 and the third manifold 135, and the medium outlet 132 communicates with the third manifold 135.

The first manifold 133, the second manifold 134, the third manifold 135, the plurality of first branch channels 136, and the plurality of second branch channels 137 may each extend in a straight line, a fold line, an arc, or the like. That is, the specific configuration of each flow channel is not limited.

In the above solution, subdividing the flow channel into manifolds and branch channels can further improve the uniformity of heat exchange by the heat exchange medium.

According to some embodiments of the present application, referring to FIGs. 3 to 8, the thermal management component 13 has a first cavity 138, a second cavity 139, a third cavity 1310, and a fourth cavity 1311 that are sequentially communicated. The medium inlet 131 communicates with the first cavity 138, and the medium outlet 132 communicates with the fourth cavity 1311. The first cavity 138 and the second cavity 139 are separated by a first partition plate 1312, and a first communication port 13121 communicating the first cavity 138 and the second cavity 139 is provided on the first partition plate 1312. The second cavity 139 and the third cavity 1310 are separated by a second partition plate 1313, and a second communication port 13131 communicating the second cavity 139 and the third cavity 1310 is provided on the second partition plate 1313. The third cavity 1310 and the fourth cavity 1311 are separated by a third partition plate 1314, and a third communication port 13141 communicating the third cavity 1310 and the fourth cavity 1311 is provided on the third partition plate 1314. A plurality of first branch channels 136 are partitioned in the second cavity 139 by a plurality of fourth partition plates 1315, and a plurality of second branch channels 137 are partitioned in the third cavity 1310 by a plurality of fifth partition plates 1316.

First the thermal management component 13 is divided into a plurality of cavities and then further partitioned into a plurality of flow channels, resulting in lower design and processing costs.

Similarly, the configuration of each cavity is not specifically limited.

In the above solution, different cavities are sequentially communicated between the medium inlet 131 and the medium outlet 132 by providing partition plates and communication ports on the partition plates, resulting in lower processing costs and higher processing efficiency.

According to some embodiments of the present application, referring to FIGs. 3 to 8, in a same projection plane perpendicular to the second direction Y, an orthographic projection of the first end battery cell 121 at least partially overlaps with an orthographic projection of the first cavity 138; and/or, an orthographic projection of the first end battery cell 121 at least partially overlaps with an orthographic projection of the fourth cavity 1311.

Since the first cavity 138 is provided with only the medium inlet 131, and the fourth cavity 1311 is provided with only the medium outlet 132, the heat exchange efficiency of the heat exchange medium in the first cavity 138 and the fourth cavity 1311 is low.

In the above solution, in the same projection plane perpendicular to the second direction Y, the orthographic projection of the first end battery cell 121 is set to at least partially overlap with the orthographic projection of the first cavity 138, and/or at least partially overlap with the orthographic projection of the fourth cavity 1311. Thus, the heat exchange efficiency of the first end battery cell 121 can be maintained at a relatively low level, which is conducive to balancing the temperature difference of the battery cell assembly.

According to some embodiments of the present application, referring to FIGs. 3 to 8, in the same projection plane perpendicular to the second direction Y, among the plurality of battery cells 12, the orthographic projections of the other battery cells 12 except the first end battery cell 121 and the second end battery cell 122 all at least partially overlap with an orthographic projection of the second cavity 139; and/or, the orthographic projections of the other battery cells 12 except the first end battery cell 121 and the second end battery cell 122 all at least partially overlap with an orthographic projection of the third cavity 1310.

In some embodiments, the heat exchange areas of the flow channels in the second cavity 139 and the third cavity 1310 are relatively large, while the heat exchange areas of the flow channels in the first cavity 138 and the fourth cavity 1311 are relatively small.

In the above solution, in the same projection plane perpendicular to the second direction Y, the orthographic projections of the other battery cells 12 except the first end battery cell 121 and the second end battery cell 122 are set to at least partially overlap with the orthographic projection of the second cavity 139, and/or at least partially overlap with the orthographic projection of the third cavity 1310, resulting in higher heat exchange efficiency of the other battery cells 12 than that of the end battery cells 12, which is conducive to balancing the temperature difference of the battery cell assembly.

According to some embodiments of the present application, referring to FIGs. 3 to 8, the fourth partition plate 1315 has a first end close to the first partition plate 1312, and the first end is spaced apart from the first partition plate 1312. Among the plurality of fourth partition plates 1315, the closer the fourth partition plate 1315 is to the first communication port 13121, the greater a distance between the first end thereof and the first partition plate 1312.

A spacing region between the first end and the first partition plate 1312 is wedge-shaped, providing flow guiding and flow equalizing effects, allowing the heat exchange medium to be distributed more quickly and uniformly.

In the above solution, since the closer the fourth partition plate 1315 is to the first communication port 13121, the greater the distance between the first end thereof and the first partition plate 1312, the heat exchange medium can flow more quickly to the remaining portion of the thermal management component 13 after the heat exchange medium passes through the first communication port 13121 and toward the medium outlet 132, thereby improving the heat exchange efficiency.

According to some embodiments of the present application, referring to FIGs. 3 to 8, along the first direction X, the second cavity 139 has a first inner wall 1317 opposite to the first partition plate 1312. The fourth partition plate 1315 has a second end close to the first inner wall 1317, and the second end is spaced apart from the first inner wall 1317. Among the plurality of fourth partition plates 1315, the closer the fourth partition plate 1315 is to the second communication port 13131, the greater a distance between the second end thereof and the first inner wall 1317.

A spacing region between the first end and the second partition plate 1313 is wedge-shaped, providing flow guiding and flow equalizing effects, allowing the heat exchange medium to be distributed more quickly and uniformly.

In the above solution, since the closer the fourth partition plate 1315 is to the second communication port 13131, the greater the distance between the second end thereof and the first inner wall 1317, the heat exchange medium can flow more quickly to the remaining portion of the thermal management component 13 after the heat exchange medium passes through the second communication port 13131 and toward the medium outlet 132, thereby improving the heat exchange efficiency.

According to some embodiments of the present application, referring to FIGs. 3 to 8, the fifth partition plate 1316 has a third end close to the third partition plate 1314, and the third end is spaced apart from the third partition plate 1314. Among the plurality of fifth partition plates 1316, the closer the fifth partition plate 1316 is to the third communication port 13141, the greater a distance between the third end thereof and the fifth partition plate 1316.

A spacing region between the third end and the fifth partition plate 1316 is wedge-shaped, providing flow guiding and flow equalizing effects, allowing the heat exchange medium to be distributed more quickly and uniformly.

In some embodiments, the third partition plate 1314 and the first partition plate 1312 are integrally formed.

In the above solution, since the closer the fifth partition plate 1316 is to the third communication port 13141, the greater the distance between the third end thereof and the fifth partition plate 1316, the heat exchange medium can flow more quickly through the third communication port 13141 and toward the medium outlet 132, thereby improving the heat exchange efficiency.

According to some embodiments of the present application, referring to FIGs. 3 to 8, along the first direction X, the third cavity 1310 has a second inner wall 1318 opposite to the fifth partition plate 1316. The fifth partition plate 1316 has a fourth end close to the second inner wall 1318, and the fourth end is spaced apart from the second inner wall 1318. Among the plurality of fifth partition plates 1316, the closer the fifth partition plate 1316 is to the second communication port 13131, the greater a distance between the fourth end thereof and the second inner wall 1318.

In some embodiments, the first inner wall 1317 and the second inner wall 1318 are integrally formed.

A spacing region between the fourth end and the second inner wall 1318 is wedge-shaped, providing flow guiding and flow equalizing effects, allowing the heat exchange medium to be distributed more quickly and uniformly.

In the above solution, since the closer the fifth partition plate 1316 is to the second communication port 13131, the greater the distance between the fourth end thereof and the second inner wall 1318, the heat exchange medium can flow more quickly to the remaining portion of the thermal management component 13 after the heat exchange medium passes through the second communication port 13131 and toward the medium outlet 132, thereby improving the heat exchange efficiency.

According to some embodiments of the present application, referring to FIGs. 3 to 8, the thermal management component 13 further includes a fifth cavity 1319 and a sixth cavity 1320, where the fifth cavity 1319 is located on a side of the second cavity 139 away from the first cavity 138 along the first direction X, the sixth cavity 1320 is located on a side of the third cavity 1310 away from the fourth cavity 1311, and the fifth cavity 1319 and the sixth cavity 1320 do not communicate with the flow channel.

In some embodiments, the fifth cavity 1319 and the sixth cavity 1320 may be isolated from the flow channel through the first inner wall 1317 and the second inner wall 1318.

In the above solution, since the fifth cavity 1319 and the sixth cavity 1320 do not communicate with the flow channel, the thermal management component 13 has regions with relatively low heat exchange efficiency. Arranging the end battery cells 12 in these regions is conducive to balancing the temperature difference of the battery cell assembly.

According to some embodiments of the present application, referring to FIGs. 3 to 8, the thermal management component 13 includes a separately formed first profile 1321, second profile 1322, third profile 1323, fourth profile 1324, fifth profile 1325, and sixth profile 1326, where the first profile 1321 has the first cavity 138, the second profile 1322 has the second cavity 139, the third profile 1323 has the third cavity 1310, the fourth profile 1324 has the fourth cavity 1311, the fifth profile 1325 has the fifth cavity 1319, and the sixth profile 1326 has the sixth cavity 1320.

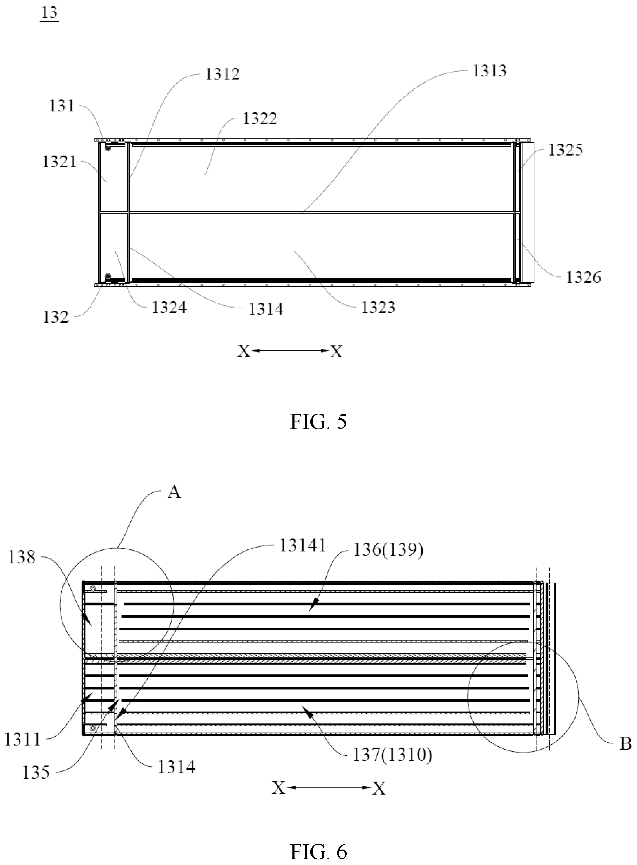

The profile naturally has a plurality of through cavities inside after processing. In some embodiments, the above various flow channels may be machined at the end portions of the profiles by machining or the like, and please refer to FIGs. 5 to 8. Thereafter, a plurality of partition plates are used to seal the end portions to form the flow channel through which the heat exchange medium flows.

The partition plates used for sealing may be connected to the end portions of the profiles by welding.

In the above solution, forming the thermal management component 13 by splicing profiles can utilize the inherent configurations inside the profiles to form the flow channel, resulting in lower costs and higher processing efficiency. In addition, the deformation amount of the thermal management component 13 during processing is low, and the precision is high.

According to some embodiments of the present application, referring to FIGs. 3 to 8, in the same projection plane perpendicular to the second direction Y, an orthographic projection of the second end battery cell 122 at least partially overlaps with an orthographic projection of the fifth cavity 1319; and/or, an orthographic projection of the second end battery cell 122 at least partially overlaps with an orthographic projection of the sixth cavity 1320.

Since the fifth cavity 1319 and the sixth cavity 1320 do not communicate with the flow channel, the correspondingly arranged second end battery cell 122 can have low heat exchange efficiency.

In the above solution, this further results in a relatively small temperature difference among the individual battery cells 12 within the battery cell assembly.

According to some embodiments of the present application, referring to FIGs. 3 to 8, among the plurality of battery cells 12, two battery cells 12 located at two ends are respectively a first end battery cell 121 and a second end battery cell 122. The battery apparatus 100 further includes a first thermal insulation pad 14, where the first thermal insulation pad 14 is disposed between the first end battery cell 121 and the thermal management component 13; and/or, the battery apparatus 100 further includes a second thermal insulation pad, where the second thermal insulation pad is disposed between the second end battery cell 122 and the thermal management component 13.

The material of the thermal insulation pad may include but is not limited to silicone, wood, plastic, polyurethane elastomer, ceramic, or the like.

The thermal insulation pad may be arranged by bonding, fastener connection, or the like.

In the above solution, providing a thermal insulation pad between the battery cell 12 at the end portion and the thermal management component 13 can reduce the heat exchange efficiency of the thermal management component 13 to the battery cell 12 at the end portion, thereby making the temperature difference among the individual battery cells 12 within the battery cell assembly relatively small, and lowering the risk of thermal stress concentration in the battery cell assembly.

According to some embodiments of the present application, referring to FIGs. 3 to 8, among the plurality of battery cells 12, two battery cells 12 located at two ends are respectively a first end battery cell 121 and a second end battery cell 122. The battery apparatus 100 further includes a first limiting member 15 and a second limiting member 16, where the first limiting member 15 and the second limiting member 16 are spaced apart along the first direction X, the plurality of battery cells 12 are disposed between the first limiting member 15 and the second limiting member 16, the first end battery cell 121 is located at an end of a battery cell 12 group close to the first limiting member 15, and the second end battery cell 122 is located at an end of the battery cell 12 group close to the second limiting member 16.

The limiting member may be an end plate of the battery cell assembly or a swelling beam provided in the battery apparatus 100 for preventing swelling and deformation of the battery cell 12.

The material of the limiting member may be fiber reinforced material, metal, composite material, or the like.

In the above solution, the limiting member increases the heat exchange path between the battery cell 12 at the end portion and the thermal management component 13, setting the heat exchange efficiency between the thermal management component 13 and the battery cell 12 at the end portion located at at least one end of the two ends along the first direction X of the battery cell assembly to be less than the heat exchange efficiency with any battery cell 12 located between the two ends along the first direction X can significantly lower the risk of thermal stress concentration in the battery cell assembly.

According to some embodiments of the present application, referring to FIGs. 3 to 8, the battery apparatus 100 further includes a third thermal insulation pad, where the third thermal insulation pad is disposed between the first limiting member 15 and the first end battery cell 121; and/or, a fourth thermal insulation pad, where the fourth thermal insulation pad is disposed between the second limiting member 16 and the second end battery cell 122.

The thermal insulation pad may be provided on the limiting member or on a battery cell 12 at the end portion.

In the above solution, disposing a thermal insulation pad between the limiting member and the battery cell 12 at the end portion can reduce the heat exchange efficiency of the thermal management component 13 to the battery cell 12 at the end portion, thereby making the temperature difference among the individual battery cells 12 within the battery cell assembly relatively small, and lowering the risk of thermal stress concentration in the battery cell assembly.

According to some embodiments of the present application, referring to FIGs. 3 to 8, a material of the first limiting member 15 is metal, and/or, a material of the second limiting member 16 is metal.

The material of the limiting member may include but is not limited to aluminum, steel, aluminum alloy, or the like.

In the above solution, since the limiting member made of metal has relatively high thermal conductivity, setting the heat exchange efficiency between the thermal management component 13 and the battery cell 12 at the end portion located at at least one end of the two ends along the first direction X of the battery cell assembly to be less than the heat exchange efficiency with any battery cell 12 located between the two ends along the first direction X can significantly lower the risk of thermal stress concentration in the battery cell assembly.

According to some embodiments of the present application, referring to FIG. 1, the present application provides an electric apparatus, including the battery apparatus 100 of the above solution, where the battery apparatus 100 is configured to provide electrical energy.

The battery apparatus 100 mentioned in the embodiments of the present application refers to a single physical module that includes one or more battery cells 12 for providing higher voltage and capacity.

In some embodiments, the battery apparatus 100 includes a box body 11.

In some embodiments, the battery apparatus 100 may be a battery module. When a plurality of battery cells 12 are provided, the plurality of battery cells 12 are arranged and fixed to form a battery module.

In some embodiments, the battery apparatus 100 may be a battery pack, where the battery pack includes a box body 11 and a battery cell 12, and the battery cell 12 or the battery module is accommodated in the box body 11.

In some embodiments, the box body 11 may be used as part of the chassis structure of the vehicle 1000. For example, part of the box body 11 may become at least part of the floor of the vehicle 1000, or part of the box body 11 may become at least part of a cross beam and longitudinal beam of the vehicle 1000.

In some embodiments, the battery apparatus 100 may be an energy storage apparatus. The energy storage apparatus includes an energy storage container, an energy storage cabinet, or the like.

Since the battery apparatus 100 of the above solution has high reliability, the electric apparatus including the battery apparatus 100 of the above solution also has high reliability.

According to some embodiments of the present application, referring to FIGs. 3 to 8, the present application provides a battery apparatus 100. The battery apparatus 100 includes a battery cell assembly and a thermal management component 13, where the battery cell assembly includes a plurality of battery cells 12 arranged along a first direction X; and the thermal management component 13, where the thermal management component 13 is disposed on one side of the battery cell assembly along a second direction Y and is configured to regulate temperatures of the battery cells 12, the second direction Y intersecting the first direction X. The thermal management component 13 has a flow channel configured to accommodate a heat exchange medium. The thermal management component 13 further includes a medium inlet 131 and a medium outlet 132, where the medium inlet 131 and the medium outlet 132 both communicate with the flow channel, an orthographic projection of the battery cell assembly on the thermal management component 13 is a first projection, and the medium inlet 131 and the medium outlet 132 are located on a same side of the first projection along the first direction X.

Among the plurality of battery cells 12, two battery cells 12 located at two ends are respectively a first end battery cell 121 and a second end battery cell 122. The battery apparatus 100 further includes a first swelling beam and a second swelling beam, where the first swelling beam and the second swelling beam are spaced apart along the first direction X, the plurality of battery cells 12 are disposed between the first swelling beam and the second swelling beam, the first end battery cell 121 is located at an end of the battery cell 12 group close to the first swelling beam, and the second end battery cell 122 is located at an end of the battery cell 12 group close to the second swelling beam.

The flow channel includes a first manifold 133, a second manifold 134, a third manifold 135, a plurality of first branch channels 136, and a plurality of second branch channels 137. Along the first direction X, the first manifold 133 and the second manifold 134 are spaced apart, the first manifold 133 is located between the medium inlet 131 and the second manifold 134, the plurality of first branch channels 136 are arranged side by side between the first manifold 133 and the second manifold 134, and the medium inlet 131 communicates with the first manifold 133. Along the first direction X, the second manifold 134 and the third manifold 135 are spaced apart, the third manifold 135 is located between the medium outlet 132 and the second manifold 134, the plurality of second branch channels 137 are arranged side by side between the second manifold 134 and the third manifold 135, and the medium outlet 132 communicates with the third manifold 135. The thermal management component 13 has a first cavity 138, a second cavity 139, a third cavity 1310, and a fourth cavity 1311 that are sequentially communicated. The medium inlet 131 communicates with the first cavity 138, and the medium outlet 132 communicates with the fourth cavity 1311. The first cavity 138 and the second cavity 139 are separated by a first partition plate 1312, and a first communication port 13121 communicating the first cavity 138 and the second cavity 139 is provided on the first partition plate 1312. The second cavity 139 and the third cavity 1310 are separated by a second partition plate 1313, and a second communication port 13131 communicating the second cavity 139 and the third cavity 1310 is provided on the second partition plate 1313. The third cavity 1310 and the fourth cavity 1311 are separated by a third partition plate 1314, and a third communication port 13141 communicating the third cavity 1310 and the fourth cavity 1311 is provided on the third partition plate 1314. A plurality of first branch channels 136 are partitioned in the second cavity 139 by a plurality of fourth partition plates 1315, and a plurality of second branch channels 137 are partitioned in the third cavity 1310 by a plurality of fifth partition plates 1316. The thermal management component 13 further includes a fifth cavity 1319 and a sixth cavity 1320, where the fifth cavity 1319 is located on a side of the second cavity 139 away from the first cavity 138 along the first direction X, the sixth cavity 1320 is located on a side of the third cavity 1310 away from the fourth cavity 1311, and the fifth cavity 1319 and the sixth cavity 1320 do not communicate with the flow channel. In a same projection plane perpendicular to the second direction Y, an orthographic projection of the second end battery cell 122 at least partially overlaps with an orthographic projection of the fifth cavity 1319, and the orthographic projection of the second end battery cell 122 at least partially overlaps with an orthographic projection of the sixth cavity 1320.

The battery apparatus 100 further includes a first thermal insulation pad 14, a second thermal insulation pad, a third thermal insulation pad, and a fourth thermal insulation pad, where the first thermal insulation pad 14 is disposed between the first end battery cell 121 and the thermal management component 13, the second thermal insulation pad is disposed between the second end battery cell 122 and the thermal management component 13, the third thermal insulation pad is disposed between the first swelling beam and the first end battery cell 121, and the fourth thermal insulation pad, where the fourth thermal insulation pad is disposed between the second swelling beam and the second end battery cell 122.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery apparatus, **characterized by** comprising:
a battery cell assembly, comprising a plurality of battery cells arranged along a first direction; and
a thermal management component, wherein the thermal management component is disposed on one side of the battery cell assembly along a second direction and is configured to regulate temperatures of the battery cells, the second direction intersecting the first direction;
wherein heat exchange efficiency between the thermal management component and the battery cell at an end portion located at at least one end of two ends along the first direction of the battery cell assembly is less than heat exchange efficiency with any of the battery cells located between the two ends along the first direction.

2. The battery apparatus according to claim 1, **characterized in that** the thermal management component has a flow channel configured to accommodate a heat exchange medium; and
the thermal management component further comprises a medium inlet and a medium outlet, wherein the medium inlet and the medium outlet both communicate with the flow channel, an orthographic projection of the battery cell assembly on the thermal management component is a first projection, and the medium inlet and the medium outlet are located on a same side of the first projection along the first direction.

3. The battery apparatus according to claim 2, **characterized in that** among the plurality of battery cells, two of the battery cells located at two ends are respectively a first end battery cell and a second end battery cell;
the first end battery cell is closer to the medium inlet and the medium outlet than the second end battery cell; and
the first end battery cell at least partially overlaps with the flow channel, and the second end battery cell does not overlap with the flow channel.

4. The battery apparatus according to claim 3, **characterized in that** the flow channel comprises a first manifold, a second manifold, a third manifold, a plurality of first branch channels, and a plurality of second branch channels;
along the first direction, the first manifold and the second manifold are spaced apart, the first manifold is located between the medium inlet and the second manifold, the plurality of first branch channels are arranged side by side between the first manifold and the second manifold, and the medium inlet communicates with the first manifold; and
along the first direction, the second manifold and the third manifold are spaced apart, the third manifold is located between the medium outlet and the second manifold, the plurality of second branch channels are arranged side by side between the second manifold and the third manifold, and the medium outlet communicates with the third manifold.

5. The battery apparatus according to claim 4, **characterized in that** the thermal management component has a first cavity, a second cavity, a third cavity, and a fourth cavity that are sequentially communicated; wherein
the medium inlet communicates with the first cavity, and the medium outlet communicates with the fourth cavity;
the first cavity and the second cavity are separated by a first partition plate, and a first communication port communicating the first cavity and the second cavity is provided on the first partition plate;
the second cavity and the third cavity are separated by a second partition plate, and a second communication port communicating the second cavity and the third cavity is provided on the second partition plate;
the third cavity and the fourth cavity are separated by a third partition plate, and a third communication port communicating the third cavity and the fourth cavity is provided on the third partition plate; and
a plurality of the first branch channels are partitioned in the second cavity by a plurality of fourth partition plates, and a plurality of the second branch channels are partitioned in the third cavity by a plurality of fifth partition plates.

6. The battery apparatus according to claim 5, **characterized in that** in a same projection plane perpendicular to the second direction, an orthographic projection of the first end battery cell at least partially overlaps with an orthographic projection of the first cavity; and/or, an orthographic projection of the first end battery cell at least partially overlaps with an orthographic projection of the fourth cavity.

7. The battery apparatus according to claim 5 or 6, **characterized in that** in the same projection plane perpendicular to the second direction, among the plurality of battery cells, orthographic projections of the other battery cells except the first end battery cell and the second end battery cell all at least partially overlap with an orthographic projection of the second cavity; and/or, orthographic projections of the other battery cells except the first end battery cell and the second end battery cell all at least partially overlap with an orthographic projection of the third cavity.

8. The battery apparatus according to any one of claims 5 to 7, **characterized in that** the fourth partition plate has a first end close to the first partition plate, and the first end is spaced apart from the first partition plate; and
among the plurality of fourth partition plates, the closer the fourth partition plate is to the first communication port, the greater a distance between the first end thereof and the first partition plate.

9. The battery apparatus according to any one of claims 5 to 8, **characterized in that** along the first direction, the second cavity has a first inner wall opposite to the first partition plate;
the fourth partition plate has a second end close to the first inner wall, and the second end is spaced apart from the first inner wall; and
among the plurality of fourth partition plates, the closer the fourth partition plate is to the second communication port, the greater a distance between the second end thereof and the first inner wall.

10. The battery apparatus according to any one of claims 5 to 9, **characterized in that** the fifth partition plate has a third end close to the third partition plate, and the third end is spaced apart from the third partition plate; and
among the plurality of fifth partition plates, the closer the fifth partition plate is to the third communication port, the greater a distance between the third end thereof and the fifth partition plate.

11. The battery apparatus according to any one of claims 5 to 10, **characterized in that** along the first direction, the third cavity has a second inner wall opposite to the fifth partition plate;
the fifth partition plate has a fourth end close to the second inner wall, and the fourth end is spaced apart from the second inner wall; and
among the plurality of fifth partition plates, the closer the fifth partition plate is to the second communication port, the greater a distance between the fourth end thereof and the second inner wall.

12. The battery apparatus according to any one of claims 5 to 11, **characterized in that** the thermal management component further comprises a fifth cavity and a sixth cavity, wherein the fifth cavity is located on a side of the second cavity away from the first cavity along the first direction, the sixth cavity is located on a side of the third cavity away from the fourth cavity, and the fifth cavity and the sixth cavity do not communicate with the flow channel.

13. The battery apparatus according to claim 12, **characterized in that** the thermal management component comprises a separately formed first profile, second profile, third profile, fourth profile, fifth profile, and sixth profile, wherein the first profile has the first cavity, the second profile has the second cavity, the third profile has the third cavity, the fourth profile has the fourth cavity, the fifth profile has the fifth cavity, and the sixth profile has the sixth cavity.

14. The battery apparatus according to claim 12 or 13, **characterized in that** in the same projection plane perpendicular to the second direction, an orthographic projection of the second end battery cell at least partially overlaps with an orthographic projection of the fifth cavity; and/or, an orthographic projection of the second end battery cell at least partially overlaps with an orthographic projection of the sixth cavity.

15. The battery apparatus according to any one of claims 1 to 14, **characterized in that** among the plurality of battery cells, two of the battery cells located at two ends are respectively a first end battery cell and a second end battery cell;
the battery apparatus further comprises a first thermal insulation pad, wherein the first thermal insulation pad is disposed between the first end battery cell and the thermal management component;
and/or, the battery apparatus further comprises a second thermal insulation pad, wherein the second thermal insulation pad is disposed between the second end battery cell and the thermal management component.

16. The battery apparatus according to any one of claims 1 to 15, **characterized in that** among the plurality of battery cells, two of the battery cells located at two ends are respectively a first end battery cell and a second end battery cell; and
the battery apparatus further comprises:
a first limiting member and a second limiting member, wherein the first limiting member and the second limiting member are spaced apart along the first direction, the plurality of battery cells are disposed between the first limiting member and the second limiting member, the first end battery cell is located at an end of the battery cell assembly close to the first limiting member, and the second end battery cell is located at an end of the battery cell assembly close to the second limiting member.

17. The battery apparatus according to claim 16, **characterized in that** the battery apparatus further comprises:
a third thermal insulation pad, wherein the third thermal insulation pad is disposed between the first limiting member and the first end battery cell; and/or
a fourth thermal insulation pad, wherein the fourth thermal insulation pad is disposed between the second limiting member and the second end battery cell.

18. The battery apparatus according to claim 16 or 17, **characterized in that** a material of the first limiting member is metal, and/or, a material of the second limiting member is metal.

19. An electric apparatus, **characterized by** comprising the battery apparatus according to any one of claims 1 to 18, wherein the battery apparatus is configured to provide electrical energy.
